# EUROPÄISCHE PATENTSCHRIFT

(11) **EP 3 784 523 B1**
(45) Veröffentlichungstag und Bekanntmachung des Hinweises auf die Patenterteilung: **15.06.2022**
(21) Anmeldenummer: 19709673.8
(22) Anmeldetag: 05.03.2019
(51) Int. Cl.: B60N 2/28, B60N 2/58, B60N 2/60

(54) **FÜHRUNGSELEMENT MIT BEFESTIGUNG AN EINEM SITZKISSEN, SITZKISSEN, FAHRZEUGSITZ UND FAHRZEUG MIT EINEM SOLCHEN FÜHRUNGSELEMENT**
GUIDE ELEMENT COMPRISING FASTENING TO A SEAT CUSHION, SEAT CUSHION, VEHICLE SEAT AND VEHICLE HAVING A GUIDE ELEMENT OF THIS TYPE
ÉLÉMENT DE GUIDAGE AVEC FIXATION À UN COUSSIN DE SIÈGE, COUSSIN DE SIÈGE, SIÈGE DE VÉHICULE ET VÉHICULE ÉQUIPÉ D'UN TEL ÉLÉMENT DE GUIDAGE

(30) Priorität: 25.04.2018 DE 102018206398
(43) Veröffentlichungstag der Anmeldung: 03.03.2021
(73) Patentinhaber: Audi AG, 85045 Ingolstadt (DE)
(72) Erfinder: WEBER, Michael Daniel, 73432 Aalen (DE); BECKETT, Jürgen, 63776 Mömbris (DE)
(86) Internationale Anmeldenummer: PCT/EP2019/055382
(87) Internationale Veröffentlichungsnummer: WO 2019/206500

(56) Entgegenhaltungen:
- EP-A1- 3 023 294
- EP-A1- 3 053 775
- DE-A1-102011 002 045
- US-A1- 2017 355 286

## Beschreibung

Die Erfindung betrifft ein Führungselement, insbesondere Isofixführungselement, ein Sitzkissen mit einem solchen Führungselement sowie einen Fahrzeugsitz mit einem solchen Sitzkissen und ein Fahrzeug mit einem derartigen Fahrzeugsitz.

Derartige Führungselemente kommen in Fahrzeugen insbesondere bei der Befestigung von Kindersitzen auf einem Fahrzeugsitz zum Einsatz. Dabei dienen die Führungselemente dazu, an einem Kindersitz vorhandenen Rastelemente in Richtung von Befestigungsbügeln (Isofix-Haltebügeln) zu führen, die mit der Karosserie des Fahrzeugs verbunden sind, so dass die Rastelemente an den Befestigungsbügeln eingerastet werden können und der Kindersitz sicher gehalten wird. Ein solches Befestigungssystem für Kindersitze ist auch unter der Bezeichnung Isofix bekannt.

Aus der US 2017/355286 A1 ist ein Führungselement gemäß dem Oberbegriff von Aspruch 1 bekannt.

Weitere Führungselemente sind beispielsweise aus der EP 3 053 775 A1, der EP3023294 A1 und der DE 10 2011 002 045 A1 bekannt.

Bei der Fertigung von Fahrzeugsitzen werden die Führungselemente üblicherweise erst dann eingebaut, wenn das betreffende Sitzkissen bereits in einem Fahrzeugsitz montiert worden ist. Entsprechend werden Sitzkissen und Führungselemente getrennt voneinander angeliefert und in aufeinanderfolgenden Arbeitsschritten montiert. Der Einbau der Führungselemente in den bereits zusammengebauten bzw. in der Fahrzeugkarosserie montierten Fahrzeugsitz ist ein Zusatzschritt im Montageablauf, der zeitintensiv ist.

Die der Erfindung zu Grunde liegende Aufgabe wir darin gesehen, ein Führungselement anzugeben, das eine verbesserte Montage ermöglicht.

Diese Aufgabe wird gelöst durch ein Führungselement mit den Merkmalen des Patentanspruchs 1, durch ein Sitzkissen mit den Merkmalen des Anspruchs 4, einen Fahrzeugsitz mit den Merkmalen des Anspruchs 7 und ein Kraftfahrzeug mit den Merkmalen des Patentanspruchs 8. Vorteilhafte Ausgestaltungen mit zweckmäßigen Weiterbildungen sind in den abhängigen Patentansprüchen angegeben.

Vorgeschlagen wird also ein Führungselement, insbesondere Isofixführungselement bzw. Isofixtrichter, mit einem Bodenabschnitt, einem Rückseitenabschnitt und zwei mit dem Boden verbundenen Seitenabschnitten, mit einer Einführöffnung, die durch jeweilige Innenseiten des Bodenabschnitts und der beiden Seitenabschnitte begrenzt ist, und mit einer zwischen dem Bodenabschnitt und dem Rückseitenabschnitt ausgebildeten Bügelöffnung, die in den Seitenabschnitten ausgebildete Einschnitte aufweist, derart dass in den Einschnitten ein bügelartiges Fixierelement aufnehmbar ist und dass das Fixierelement durch die Einführöffnung hindurch zugänglich ist, wobei an einer Außenseite des Bodenabschnitts wenigstens ein vom Bodenabschnitt vorstehendes Befestigungselement angeordnet ist. Dabei ist vorgesehen, dass das Befestigungselement wenigstens eine langlochartige Befestigungsöffnung aufweist, die mit einer Lasche eines Sitzkissens oder eines Sitzbezuges eines Fahrzeugsitzes verbindbar ist.

Durch die Befestigungsöffnung des Befestigungselementes kann eine Lasche, insbesondere eine Stofflasche oder eine Lasche aus einem Kunststoffgewebe oder dergleichen, hindurchgeführt bzw. eingefädelt werden, so dass das Führungselement vor der Montage des Sitzkissens mit diesem verbunden werden kann. Entsprechend kann das Sitzkissen mit daran angebrachten Führungselementen in einem Arbeitsschritt montiert werden, ohne dass die Führungselemente nachträglich verbaut werden müssen.

Die Befestigungsöffnung kann im Wesentlichen rechteckig ausgeführt sein, wobei eine Länge der Befestigungsöffnung etwa das Vierfache der Breite der Befestigungsöffnung beträgt. Beispielsweise kann die Länge der Öffnung etwa 35-50mm betragen, wobei die Breite etwa 9 bis 12mm beträgt. Hierdurch kann eine für eine gute Handhabung ausreichend dimensionierte Lasche in einfacher Weise in die Befestigungsöffnung eingeführt werden, so dass das Führungselement mit dem Sitzkissen verbunden werden kann.

Die Einschnitte können einen jeweiligen Endabschnitt aufweisen, der derart dimensioniert ist, dass das Führungselement an dem in den Einschnitten aufgenommen Fixierelement formschlüssig oder/und reibschlüssig fixierbar ist, insbesondere clipartig fixierbar ist. Hierdurch können bei der Montage des Sitzkissens mit den daran mittels der Lasche befestigten Führungselementen, die Führungselemente einfach mit den bügelartigen Fixierelementen verbunden werden, insbesondere können die Führungselemente einfach auf die Fixierelemente gedrückt und damit im Endabschnitt eingerastet werden.

Die der Erfindung zu Grunde liegende Aufgabe wird auch gelöst durch ein Sitzkissen für einen Sitz eines Fahrzeugs, mit einem Schaumkörper, einer an dem Schaumkörper angeordneten Stützstruktur, und mit einem den Schaumkörper umgebenden Bezug. Dabei ist vorgesehen, dass an einem hinteren Bereich des Sitzkissens wenigstens eine mit der Stützstruktur oder/und dem Bezug verbundene Lasche angeordnet ist und dass mit der Lasche ein oben beschriebenes Führungselement verbunden ist.

Dabei kann ein freies Ende der Lasche schlaufenartig um einen Draht des Drahtgeflechts geschlagen werden und dann mit der restlichen Lasche verbunden werden, beispielsweise unter Verwendung einer Öse, eines Klettverschlusses, eines Klebstoffs oder dergleichen. Alternativ oder ergänzend kann die Lasche an dem Bezug des Kissens befestigt sein, beispielsweise mit diesem vernäht oder verklebt sein.

Das Sitzkissen kann zwei Laschen aufweisen, die entlang des hinteren Bereichs des Sitzkissen in einem Abstand zueinander angeordnet sind, der im Wesentlichen einem Abstand von zwei mit einer Fahrzeugkarosserie verbundenen bügelartigen Fixierelementen entspricht, insbesondere dem Abstand von 270 bis 290 mm zwischen zwei Isofix-Haltebügeln. Entsprechend können an dem Sitzkissen zwei Führungselemente angebracht werden, um die Montage des Fahrzeugsitzes zu vereinfachen.

Die Lasche kann eine Länge aufweisen, die so dimensionier ist, dass ein freies Ende, das durch die Befestigungsöffnung des Führungselements hindurch geführt wird, im montierten Zustand des Führungselements am Sitzkissen, unterhalb des Bodenabschnitts des Führungselements angeordnet ist.

Die Erfindung betrifft ferner auch einen Fahrzeugsitz mit einem oben beschriebenen Sitzkissen, das wenigstens ein oben beschriebenes Führungselement aufweist. Schließlich betrifft die Erfindung auch ein Fahrzeug mit einem derartigen Fahrzeugsitz. Dabei kann der Fahrzeugsitz ein Vordersitz oder ein Rücksitz eines Fahrzeugs sein, insbesondere ein Beifahrersitz oder ein linker oder rechter oder mittlerer Sitz einer Rücksitzbank.

Weitere Vorteile, Merkmale und Einzelheiten der Erfindung ergeben sich aus den Patentansprüchen, der nachfolgenden Beschreibung bevorzugter Ausführungsformen sowie anhand der Zeichnungen. Dabei zeigt:
- Fig. 1: in einer schematischen und vereinfachten Darstellung einen Fahrzeugsitz mit zwei Führungselementen;
- Fig. 2: in einer schematischen und vereinfachten seitlichen Ansicht ein Führungselement und eine damit verbundene Lasche eines Sitzkissens;
- Fig. 3: in einer schematischen und vereinfachten Perspektivdarstellung das Führungselement der Figur 2 von vorne;
- Fig. 4: eine vereinfachte und schematische Schnittdarstellung eines im Sitzkissen aufgenommenen Führungselements mit schematisch angedeuteter Anordnung einer mit dem Drahtgeflecht des Sitzkissens verbundenen Lasche; und
- Fig. 5: eine schematische und vereinfachte Perspektivansicht auf die Rückseite eines Sitzkissens mit teilweise dargestelltem Drahtgeflecht, teilweise dargestellten Fixierelementen und zwei Führungselementen.

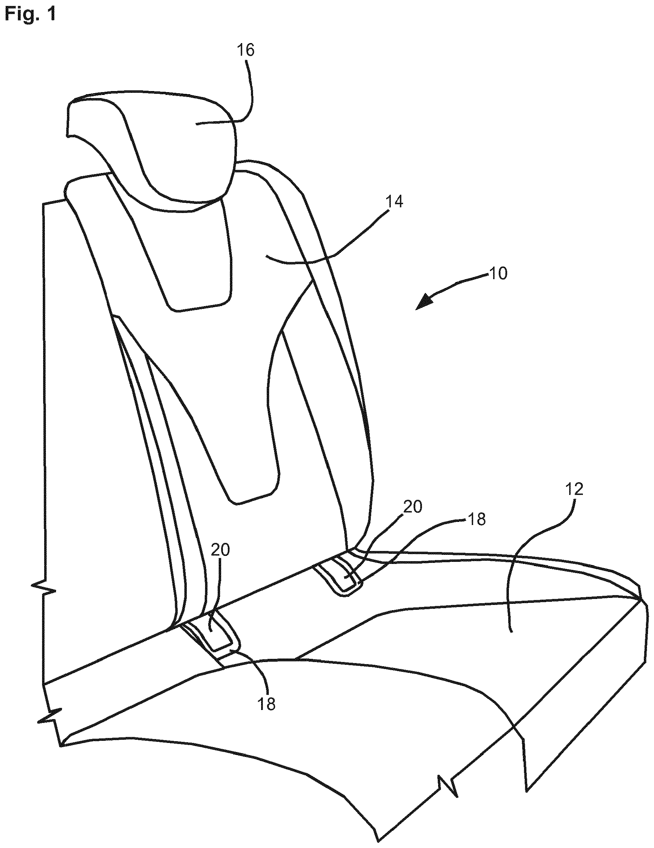

In Figur 1 ist schematisch und vereinfacht ein Fahrzeugsitz 10 gezeigt. Der Fahrzeugsitz 10 umfasst ein Sitzkissen 12. Ferner weist der Fahrzeugsitz 10 eine Rückenlehne 14 und eine daran angebrachte Kopfstütze 16 auf. Im Bereich des Übergangs zwischen dem Sitzkissen 12 und der Rückenlehne 14 sind im Sitzkissen 12 zwei Führungselemente 18 angeordnet. Die Führungselemente 18 dienen dazu, den Zugang zu dahinter angeordneten Fixierelementen zu ermöglichen, um einen Kindersitz auf dem Fahrzeugsitz 10 befestigen zu können. In der Figur 1 sind die Führungselemente 18 mit einem Abdeckelement 20 gezeigt, das sich in seiner Schließstellung befindet, so dass die dahinter liegenden Fixierelemente nicht sichtbar sind.

Der in Figur 1 dargestellte Fahrzeugsitz ist rein beispielhaft ein hinterer, linker Sitz eines Fahrzeugs. Die Führungselemente 18 können aber genauso gut an einem Vordersitz, insbesondere Beifahrersitz eines Fahrzeugs, oder an einem rechten bzw. mittleren Sitz einer Rücksitzbank angeordnet sein.

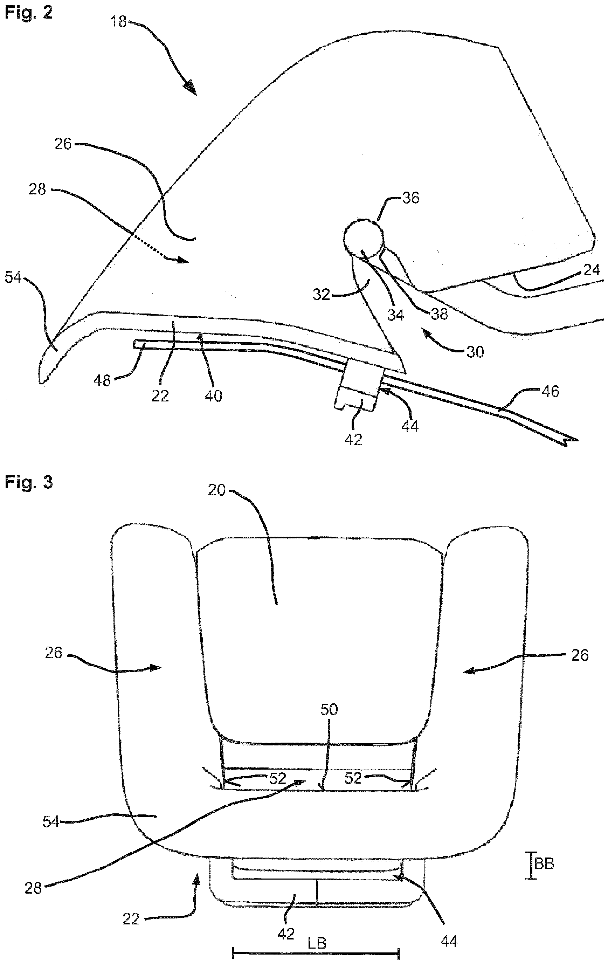

Das Führungselement 18 ist in der Figur 2 in einer schematischen seitlichen Aufrissdarstellung gezeigt. Es umfasst einen Bodenabschnitt 22, einen Rückseitenabschnitt 24 und zwei Seitenabschnitte 26. Bezogen auf einen in Figur 1 dargestellten montierten Zustand, bei dem eine Einführöffnung 28 des Führungselements 18 nach vorne ausgerichtet ist, wird in Figur 2 auf den rechten Seitenabschnitt 26 geblickt, der allerdings transparent dargestellt ist. Die Einführöffnung 28 wird von den jeweiligen Innenseiten des Bodenabschnitts 22 und der beiden Seitenabschnitte 26 begrenzt.

Das Führungselement 18 weist eine zwischen dem Bodenabschnitt 22 und dem Rückseitenabschnitt 24 ausgebildete Bügelöffnung 30 auf. Die Bügelöffnung 30 weist in den Seitenabschnitten 26 ausgebildete Einschnitte 30 auf. Dabei sind die Einschnitten 32 so ausgebildet, dass in ihnen ein bügelartiges Fixierelement 34 aufnehmbar ist, so dass das Fixierelement 34 durch die Einführöffnung 28 hindurch zugänglich ist. Das Fixierelement 34 ist üblicherweise ein mit einer Karosserie eines Fahrzeugs verbundener Isofix-Haltebügel.

Die Einschnitte 32 weisen einen jeweiligen Endabschnitt 36 auf, der derart dimensioniert ist, dass das Führungselement 18 an dem in den Einschnitten 32 aufgenommen Fixierelement 34 formschlüssig oder/und reibschlüssig fixierbar ist, insbesondere clipartig fixierbar ist. Hierzu ist am Endabschnitt 36 eine Querschnittsverengung 38 in den Einschnitten 32 vorgesehen.

An einer Außenseite 40 des Bodenabschnitts 22 ist ein Befestigungselement 42 angebracht. Das Befestigungselement 42 kann auch einstückig mit dem Bodenabschnitt 22 des Führungselements 18 ausgebildet sein. Das Befestigungselement 42 weist eine Befestigungsöffnung 44 auf. Durch die Befestigungsöffnung 44 kann eine Lasche 46 geführt werden. Hierdurch kann das Führungselement 18 mit der Lasche 46 verbunden werden. Dabei wird eine vorderes freies Ende 48 der Lasche 46 durch die Befestigungsöffnung 44 des Befestigungselement 42 eingeführt bzw. eingefädelt. In einem montierten Zustand des Führungselements 18 an dem Sitzkissen 12 (Fig. 1) ist das freie Ende 48 der Lasche 46 unterhalb des Bodenabschnitts 22 des Führungselements angeordnet und von außen (vom Fahrzeuginnraum her) nicht sichtbar.

Figur 3 zeigt das Führungselement 18 der Figur 2 in einer perspektivischen Frontansicht. Ersichtlich ist ein mit dem Bodenabschnitt 22 und den Seitenabschnitten 26 verbundenen Wulst 54, wobei der Wulst den Bodenabschnitt 22 und die Seitenabschnitte 26 in dieser Darstellung verdeckt, was durch die teilweise gestrichelten Bezugslinien für die Bezugszeichen 22, 26 illustriert ist. Wie bereits erwähnt wird die Einführöffnung 28 von einer Innenseite 50 des Bodenabschnitts 22 und von den jeweiligen Innenseiten 52 der Seitenabschnitte 26 begrenzt. Wie in der Figur 2, ist das Abdeckelement 20 in einer teilweise geöffneten Stellung gezeigt. Entsprechend ist der Einblick in die Einführöffnung 28 auch nur teilweise freigegeben.

In Figur 3 ist ferner das Befestigungselement 42 gezeigt, das sich an der Unterseite 48 des Bodenabschnitts 22 anschließt. Die in dem Befestigungselement 42 vorgesehene Befestigungsöffnung 44 ist nur teilweise sichtbar. Sie wird durch den Wulst 54 abgedeckt. Der Wulst 54 liegt in dem montierten Zustand des Führungselements 18 üblicherweise auf einem Bezug des Sitzkissens 12 auf.

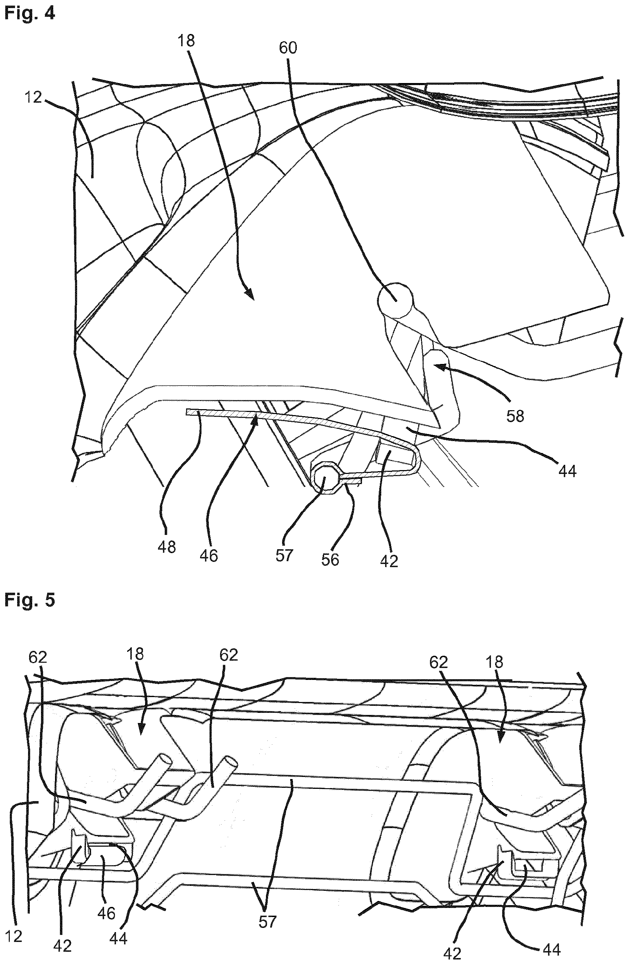

Figur 4 zeigt eine teilgeschnittene, perspektivische Darstellung des Führungselement s 18 in seiner montierten Zustand an dem Sitzkissen 12. Das Führungselement 18 ist mittels der Lasche 46 mit dem Sitzkissen 12 verbunden. Dabei ist das vordere freie Ende 48 der Lasche 46 durch die Befestigungsöffnung 44 des Befestigungselements 42 hindurchgeführt. Ein hinteres, freies Ende 56 der Lasche 46 ist mit eine Stützstruktur 58 des Sitzkissens 12 verbunden. Die Stützstruktur 58 ist hier beispielshaft als Drahtgeflecht bzw. Drahtrahmen 58 ausgeführt. Statt eines Drahtgeflechts 58 kann alternativ oder ergänzend auch eine Stützstruktur aus einem Kunststoff, beispielsweise in Form eines Kunststoffrahmens eingesetzt werden. Insbesondere ist das hintere freie Ende 56 der Lasche schlaufenartig um einen Draht 57 des Drahtgeflechts 58 geführt. Alternativ oder ergänzend kann die Lasche 46 bzw. ihr hinteres, freies Ende 56 auch mit einem Bezug des Sitzkissens verbunden, beispielsweise vernäht oder verklebt sein. Eine weitere Möglichkeit besteht darin dass die Lasche mittels einer Metall- oder Kunststofföse an dem Drahtrahmen 58 befestigt wird bzw. ist. Das Sitzkissen 12 kann mit dem mittels der Lasche befestigten Führungselement 18 als Einheit beim Montieren des Fahrzeugsitzes in einem Fahrzeug bereitgestellt werden. Entsprechend entfällt das zeitaufwändige, nachträgliche Einsetzen und Befestigen des Führungselements 18 bei bereits montiertem Sitzkissen 12.

In Figur 4 ist auch das Fixierelement 34, bzw. der Isofix-Haltebügel dargestellt. Das Fixierelemente umfasst insbesondere zwei Schenkelabschnitte 60 und einen die Schenkelabschnitte 60 verbindenden Kopplungsabschnitt 62. Der Kopplungsabschnitt 62 verläuft quer, insbesondere Orthogonal zu den Schenkelabschnitten 60. Der Kopplungsabschnitt 62 verläuft durch das Führungselement 18, insbesondere durch dessen Innenraum hindurch. Das Führungselement 18, ist wie bereits oben unter Bezugnahme auf Figur 2 beschrieben, formschlüssig am Kopplungsabschnitt 62 des Haltebügels 34 befestigt.

Die Befestigungsöffnung 44 ist im Wesentlichen rechteckig ausgebildet, was insbesondere aus der rückseitigen Perspektivansicht der Figur 5 und der Figur 3 ersichtlich ist. Dabei kann die Befestigungsöffnung 44 eine Länge LB aufweisen, die etwa das Vierfache der Breite BB der Befestigungsöffnung 44 beträgt. Beispielsweise kann die Länge LB der Öffnung etwa 35-50mm betragen, wobei die Breite LB bzw. Höhe etwa 9 bis 12mm beträgt. Hierdurch kann eine für eine gute Handhabung ausreichend dimensionierte Lasche 46 in einfacher Weise in die Befestigungsöffnung 44 eingeführt werden, so dass das Führungselement 18 mit dem Sitzkissen 12 verbunden werden kann.

Figur 5 zeigt die rückwärtige perspektivische Ansicht auf zwei Führungselemente 18 des Sitzkissens 12. Die Führungselemente 18 sind an den beiden Fixierelementen bzw. Haltebügeln 34 eingehängt. In dieser Darstellung sind ferner Drähte 57 des Drahtgeflechts bzw. Drahtrahmens 58 ersichtlich. Die hier beispielhaft als Drahtgeflecht 58 ausgebildete Stützstruktur dient dazu, ein nicht weiter dargestelltes Schaumelement des Sitzkissens 12 zu stabilisieren. Ferner kann eine solche Stützstruktur auch dazu dienen, das Sitzkissen mit 12 mit der Karosserie des Fahrzeugs zu verbinden. Bei dem linken Führungselement 18 ist vereinfacht die Lasche 46 eingezeichnet, die das Führungselement 18 mit dem Draht 57 des Drahtgeflechts 58 und somit mit dem Sitzkissen 12 verbindet.

## Patentansprüche

1. Führungselement, insbesondere Isofixführungselement, mit
einem Bodenabschnitt (22), einem Rückseitenabschnitt (24) und zwei mit dem Boden verbundenen Seitenabschnitten (26),
einer Einführöffnung (28), die durch jeweilige Innenseiten (50, 52) des Bodenabschnitts (22) und der beiden Seitenabschnitte (26) begrenzt ist, einer zwischen dem Bodenabschnitt (22) und dem Rückseitenabschnitt (24) ausgebildeten Bügelöffnung (30), die in den Seitenabschnitten (26) ausgebildete Einschnitte (32) aufweist, derart dass in den Einschnitten (32) ein bügelartiges Fixierelement (34, 62) aufnehmbar ist und dass das Fixierelement (34, 62) durch die Einführöffnung (28) hindurch zugänglich ist,
wobei an einer Außenseite (40) des Bodenabschnitts (22) wenigstens ein vom Bodenabschnitt (22) vorstehendes Befestigungselement (42) angeordnet ist, **dadurch gekennzeichnet, dass** das Befestigungselement (42) wenigstens eine langlochartige Befestigungsöffnung (44) aufweist, die mit einer Lasche (46) eines Sitzkissens (12) oder eines Sitzbezuges eines Fahrzeugsitzes (10) verbindbar ist.

2. Führungselement nach Anspruch 1, **dadurch gekennzeichnet**, das die Befestigungsöffnung im Wesentlichen rechteckig ausgeführt ist, wobei eine Länge der Befestigungsöffnung etwa das Vierfache der Breite der Befestigungsöffnung beträgt.

3. Führungselement nach Anspruch 1 oder 2, **dadurch gekennzeichnet, dass** die Einschnitte (32) einen jeweiligen Endabschnitt (36) aufweisen, der derart dimensioniert ist, dass das Führungselement (18) an dem in den Einschnitten (32) aufgenommen Fixierelement (34) formschlüssig oder/und reibschlüssig fixierbar ist, insbesondere clipartig fixierbar ist.

4. Sitzkissen für einen Sitz (10) eines Fahrzeugs, mit
einem Schaumkörper;
einer an dem Schaumkörper angeordneten Stützstruktur (58);
einem den Schaumkörper umgebenden Bezug;
**dadurch gekennzeichnet, dass** an einem hinteren Bereich des Sitzkissens (12) wenigstens eine mit der Stützstruktur (58) oder/und dem Bezug verbundene Lasche (46) angeordnet ist und dass mit der Lasche (46) ein Führungselement (18) nach einem der vorhergehenden Ansprüche verbunden ist.

5. Sitzkissen nach Anspruch 4, **dadurch gekennzeichnet, dass** es zwei Laschen (46) aufweist, die entlang des hinteren Bereichs des Sitzkissens (12) in einem Abstand zueinander angeordnet sind, der im Wesentlichen einem Abstand von zwei mit einer Fahrzeugkarosserie verbundenen bügelartigen Fixierelementen (34, 60, 62) entspricht, insbesondere dem Abstand von 270 bis 290mm zwischen zwei Isofix-Haltebügeln.

6. Sitzkissen nach Anspruch 4 oder 5, **dadurch gekennzeichnet, dass** die Lasche (46) eine Länge aufweist, die so dimensioniert ist, dass ein freies Ende (48), das durch die Befestigungsöffnung (44) des Befestigungselements (42) hindurch geführt ist, im montierten Zustand des Führungselements (18) am Sitzkissen (12), unterhalb des Bodenabschnitts (22) des Führungselements (18) angeordnet ist.

7. Fahrzeugsitz (10) mit einem Sitzkissen (12) nach einem der Ansprüche 4 bis 6

8. Fahrzeug mit wenigstens einem Fahrzeugsitz (10) nach Anspruch 7.

## Claims

1. Guide element, particularly Isofix guide element, having a base portion (22), a rear side portion (24) and two side portions (26) connected to the base,
an introduction opening (28) which is delimited by respective inner sides (50, 52) of the base portion (22) and the two side portions (26), a bracket opening (30), formed between the base portion (22) and the rear side portion (24), which has notches (32) formed in the side portions (26) such that a bracket -like fastening element (34, 62) can be accommodated in the notches (32) and that the fastening element (34, 62) is accessible through the introduction opening (28),
wherein on an outer side (40) of the base portion (22) is arranged at least one fastening element (42) protruding from the base portion (22), **characterised in that** the fastening element (42) has at least one fastening opening (44) in the form of an elongated hole, which can be connected to a tab (46) of a seat cushion (12) or of a seat cover of a vehicle seat (10).

2. Guide element according to claim 1, **characterised in that** the fastening opening is substantially rectangular in design, wherein a length of the fastening opening is approximately four times the width of the fastening opening.

3. Guide element according to claim 1 or 2, **characterised in that** the notches (32) have a respective end portion (36) which is dimensioned such that the guide element (18) can be fixed in a form-fitting or/and friction-fitting manner on the fastening element (34) accommodated in the notches (32), in particular can be fastened in a clip-like manner.

4. Seat cushion for a seat (10) of a vehicle, having
a foam body;
a support structure (58) arranged on the foam body;
a cover surrounding the foam body;
**characterised in that** on a rear region of the seat cushion (12) is arranged at least one tab (46) connected to the support structure (58) or/and the cover, and that a guide element (18) according to any of the preceding claims is connected to the tab (46).

5. Seat cushion according to claim 4, **characterised in that** it has two tabs (46) which are arranged along the rear region of the seat cushion (12) at a distance from one another which is substantially equal to a spacing of two bracket-like fixing elements (34, 60, 62) which are connected to a vehicle body, in particular to the spacing of 270 to 290 mm between two Isofix holding brackets.

6. Seat cushion according to claim 4 or 5, **characterised in that** the tab (46) has a length which is dimensioned such that a free end (48) which is guided through the fastening opening (44) of the fastening element (42) is arranged, in the installed state of the guide element (18) on the seat cushion (12), below the base portion (22) of the guide element (18).

7. Vehicle seat (10) having a seat cushion (12) according to any of claims 4 to 6.

8. Vehicle having at least one vehicle seat (10) according to claim 7.

## Revendications

1. Élément de guidage, en particulier élément de guidage Isofix, comprenant une partie inférieure (22), une partie arrière (24) et deux parties latérales (26) reliées au fond,
une ouverture d'insertion (28) délimitée par des côtés intérieurs respectifs (50, 52) de la partie inférieure (22) et des deux parties latérales (26), une ouverture en étrier (30) formée entre la partie inférieure (22) et la partie arrière (24) et présentant des encoches (32) ménagées dans les parties latérales (26) de sorte qu'un élément de fixation (34, 62) en forme d'étrier puisse être reçu dans les encoches (32) et que l'élément de fixation (34, 62) soit accessible par l'ouverture d'insertion (28),
dans lequel au moins un élément de fixation (42) saillant de la partie inférieure (22) est disposé sur un côté extérieur (40) de la partie inférieure (22), **caractérisé en ce que** l'élément de fixation (42) présente au moins une ouverture de fixation (44) en forme de fente qui peut être reliée à une patte (46) d'un coussin de siège (12) ou à une garniture d'un siège de véhicule (10).

2. Élément de guidage selon la revendication 1, **caractérisé en ce que** l'ouverture de fixation est réalisée de manière sensiblement rectangulaire, dans lequel une longueur de l'ouverture de fixation représente environ quatre fois la largeur de l'ouverture de fixation.

3. Élément de guidage selon la revendication 1 ou 2, **caractérisé en ce que** les encoches (32) présentent une partie d'extrémité (36) respective dimensionnée de telle sorte que l'élément de guidage (18) peut être fixé par liaison de forme ou/et par friction sur l'élément de fixation (34) reçu dans les encoches (32), en particulier peut être fixé de manière clipsée.

4. Coussin de siège pour un siège (10) d'un véhicule, comprenant
un corps en mousse ;
une structure d'appui (58) disposée sur le corps en mousse ;
une garniture entourant le corps en mousse ;
**caractérisé en ce qu'**au moins une patte (46) reliée à la structure d'appui (58) ou/et à la garniture est disposée sur une zone arrière du coussin de siège (12) et **en ce qu'**un élément de guidage (18) selon l'une quelconque des revendications précédentes est relié à la patte (46).

5. Coussin de siège selon la revendication 4, **caractérisé en ce qu'**il présente deux pattes (46) disposées le long de la zone arrière du coussin de siège (12) à une distance l'une de l'autre correspondant sensiblement à une distance de deux éléments de fixation (34, 60, 62) en forme d'étrier reliés à une carrosserie de véhicule, notamment à la distance de 270 à 290 mm entre deux étriers de fixation Isofix.

6. Coussin de siège selon la revendication 4 ou 5, **caractérisé en ce que** la patte (46) présente une longueur dimensionnée de telle sorte qu'une extrémité libre (48), qui est passée à travers l'ouverture de fixation (44) de l'élément de fixation (42), est disposée, à l'état monté de l'élément de guidage (18) sur le coussin de siège (12), au-dessous de la partie inférieure (22) de l'élément de guidage (18).

7. Siège de véhicule (10) comprenant un coussin de siège (12) selon l'une quelconque des revendications 4 à 6.

8. Véhicule comprenant au moins un siège de véhicule (10) selon la revendication 7.
